**Europäisches Patentamt**

**European Patent Office**

**Office européen des brevets**

(19)

(11) Publication number: **0 191 268**
**B1**

(12) **EUROPEAN PATENT SPECIFICATION**

(45) Date of publication of patent specification: **07.03.90**

(51) Int. Cl.⁵: **B 29 D 30/00**

(21) Application number: **85810357.5**

(22) Date of filing: **02.08.85**

(54) Process for rebuilding used tyres.

(30) Priority: **11.02.85 CH 842/85**

(43) Date of publication of application:
**20.08.86 Bulletin 86/34**

(45) Publication of the grant of the patent:
**07.03.90 Bulletin 90/10**

(84) Designated Contracting States:
**AT BE DE FR GB IT LU NL SE**

(56) References cited:
**FR-A-2 345 290**
**US-A-2 405 943**
**US-A-2 421 096**
**US-A-3 472 714**
**US-A-3 841 376**
**US-A-3 993 521**
**US-A-4 218 277**
**US-A-4 234 370**

(73) Proprietor: **T.R.S. Tyres Recycling System S.A.**
**CH-6537 Grono (CH)**

(72) Inventor: **Risi, Leandro**
**Via Vercianese 43**
**I-55050 S. Michele in Escheto Lucca (IT)**

(74) Representative: **Baggiolini, Raimondo et al**
**Racheli & Fiammenghi Via San Gottardo 15**
**CH-6900 Lugano (CH)**

Courier Press, Leamington Spa, England.

## Description

The invention concerns a process for rebuilding used, also deep damaged tyres, irreparable at present.

The known process for rebuilding used tyres, comprise following stages (see i.e. the US Patent 3.841.376):

a) a preliminary control of the used tyre to be retreaded;

b) a restructuring step comprising:

removing the worn thread portion and eventually the reinforcing metallic belts;

wrapping a rubber sheet, reinforcing metallic belts and a non vulcanized sheet circumferentially around the tyre;

c) a retreading step comprising vulcanizing under heat and pressure.

These known processes do not allow to retread deep damaged tyres, since the amount of mixture of non vulcanized rubber needed to fill the deep damaged portions, is so important that after vulcanization the shape of the retreaded tyre cannot be perfectly reached.

This drawback is completely overcome by the process according to the present invention, in which two steps of vulcanization are provided.

The process according to the present invention comprises:

a) a preliminary control of the used tyre to be retreaded;

b) a restructuring step comprising:

removing the worn tread portion, eventually the reinforcing metallic belts and damaged parts;

filling the cavities formed by removing damaged parts with non-vulcanized rubber;

wrapping a rubber sheet, reinforcing metallic belts and a non-vulcanized sheet circumferentially around the tyre;

a first vulcanizing step effected under heat and pressure;

a control of the first vulcanization.

c) a retreading step comprising:

wrapping a non-vulcanized sheet and a new tread circumferentially around the tyre;

a second vulcanizing step effected under heat and pressure.

A preferred embodiment of the process according to the present invention is characterized by the characterizing part of claims 2, 3, 4.

The enclosed drawings show said preferred embodiment which is non-exhaustive and not binding.

Figure 1 shows a lorry tyre of the radial type with a metallic structure.

Figure 2 shows the same tyre after a deterioration such that it is no longer suitable for retreading according to present known techniques, that is, no longer able to be restructured according to Fig. 3.

Figures 4 to 7 show other types of ruptures or defects which are considered irreparable at present.

Figures 8a, 8b and 8c show anomalies which arise when subjecting a tyre to be restructured to a pressure which is higher than the operating pressure.

Figure 9 shows an apparatus which allows the control, by means of a laser, from bead to bead (Fig. 10) of a tyre to be restructured in order to show clearly all the defects.

Figure 11 shows the result of the scanning carried out with the laser.

Figures 12 to 21d show the restructuring operation.

Figures 22 to 29b show the first vulcanization phases in the restructuring operation.

Figures 30, 31a, 32a refer to the retreading operation according to the present invention, with the second vulcanization phase.

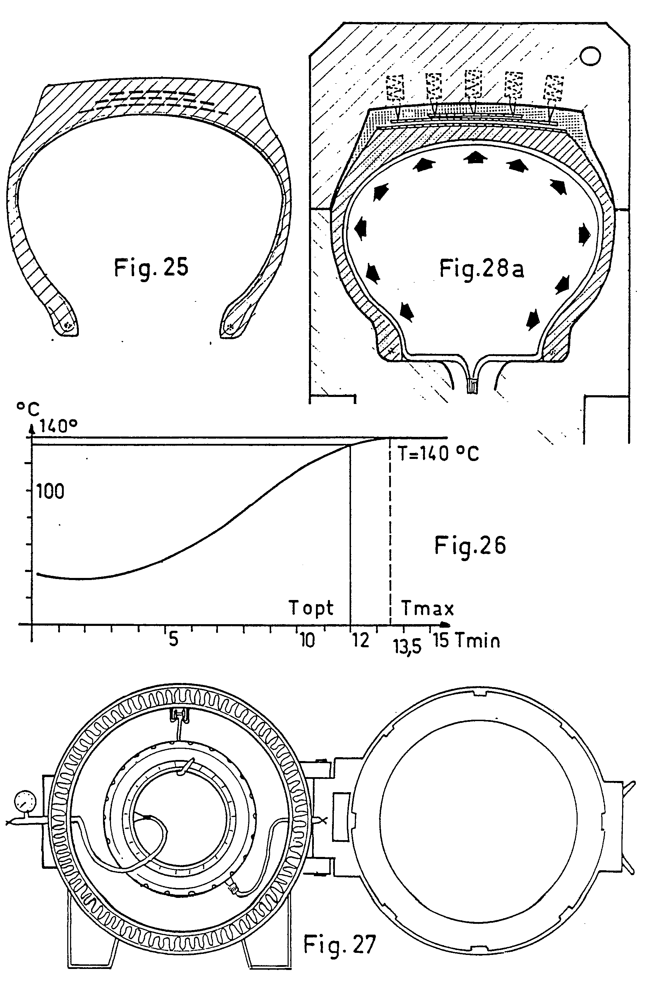

Figure 26 shows the temperature time (in minutes) diagram of the second vulcanization phase.

Figure 27 shows an apparatus for controlling the tyre after the second vulcanization.

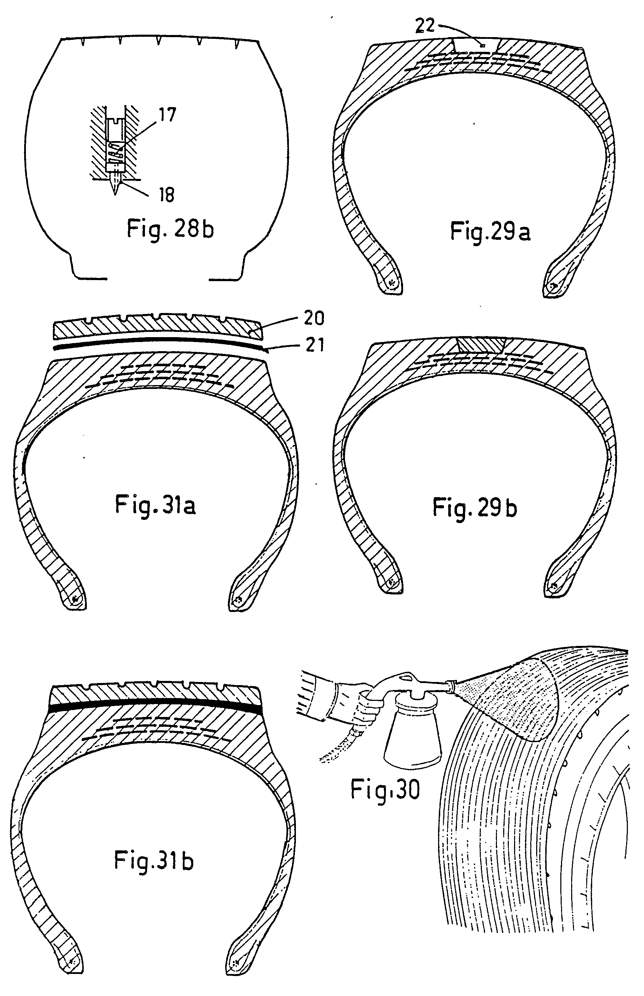

Figures 31a and 31b show the mounting phases of the tread.

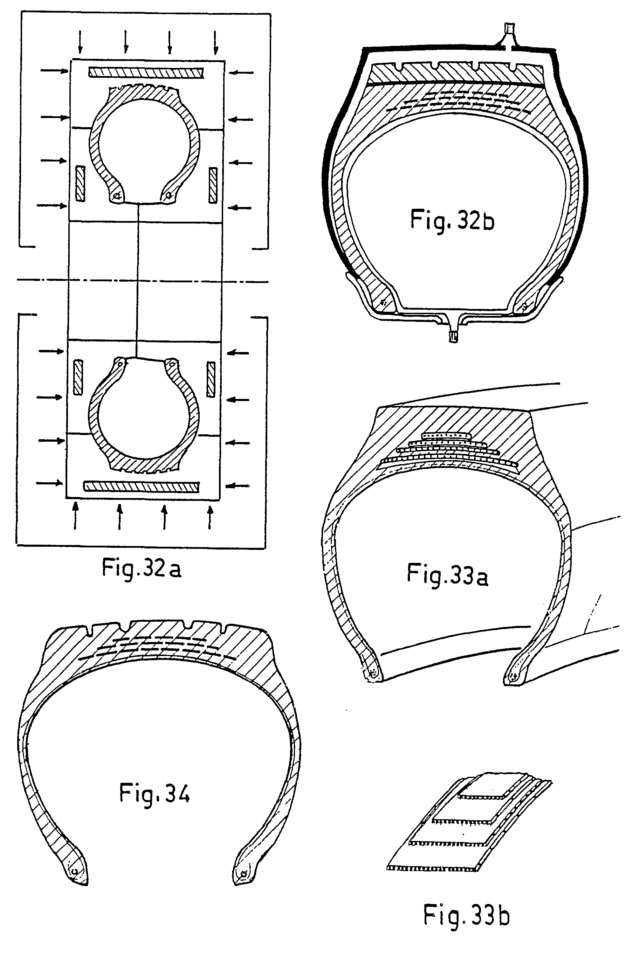

Figures 32a, 32b, 33a, 33b and 34 represent other embodiments.

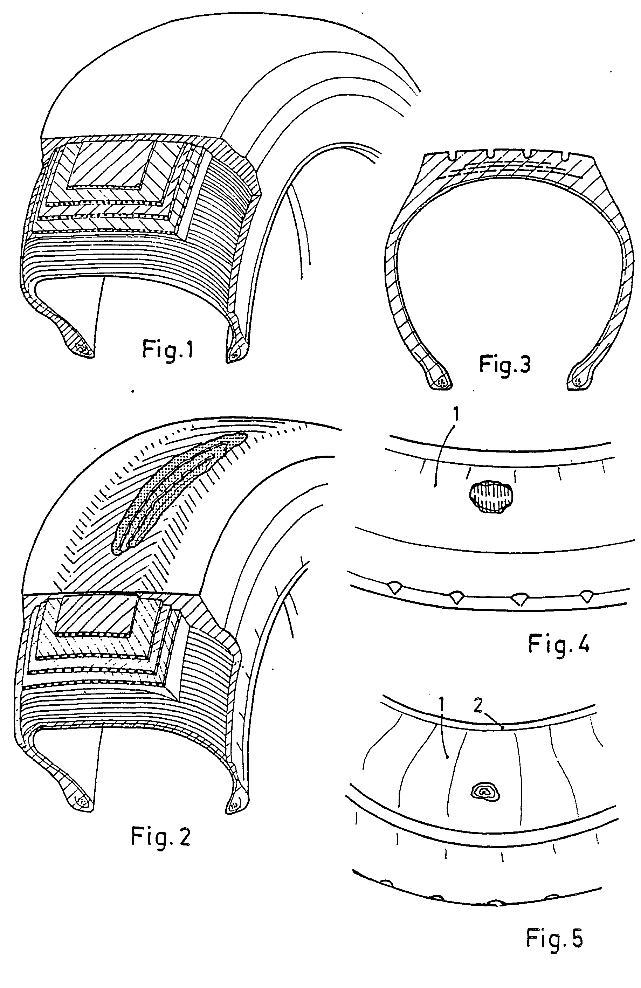

The novelty of the present invention consists in that a tyre, for example for a lorry, of the radial type which a metallic structure (Fig. 1) which underwent such deterioration while in use as to be no longer suitable (Fig. 2) for traditional retreading process (Fig. 3), and therefore is considered worn out, can be restructured according to the present process. As can be seen in claim 1, the present process comprises the following subsequent operations:

a preliminary control of the used tyre to be retreaded;

a restructuring step;

a retreading step.

The preliminary control operation comprises the following phases:

$a_1$) visual control, at the place where the used tyre is located;

$a_2$) visual control: a tyre, for example for a lorry, of the radial type (Fig. 1) with a metallic structure, not suitable for traditional retreading processes (Fig. 2), (lying around tyre service stations, retreading stations, firms specialized in collecting tyres, etc.) is then visually inspected to ascertain if the radial body 1 has lacerations, ruptures of radial chords (Figs. 3 to 7) and if the bead has cracks or gaps.

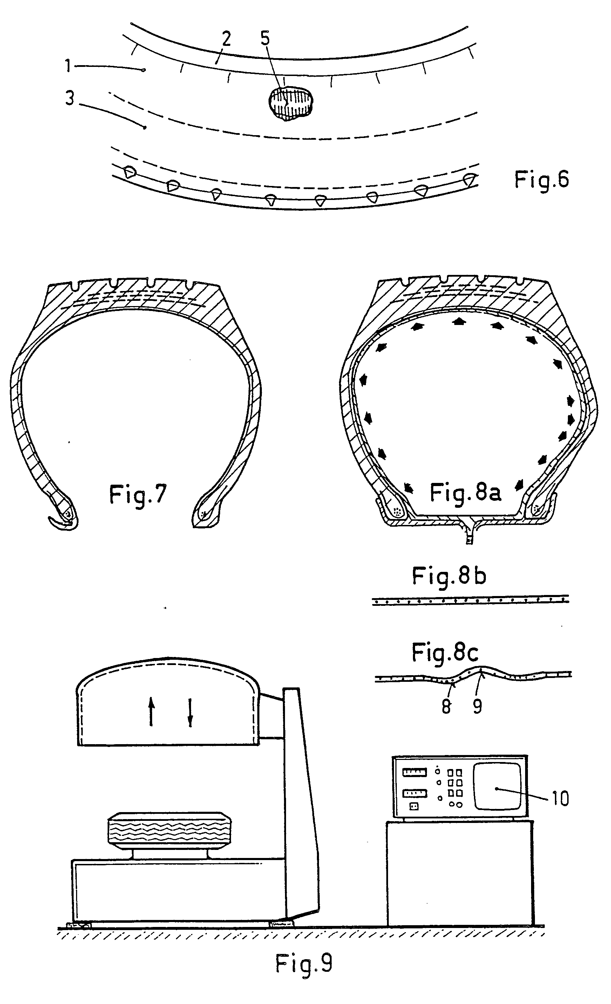

$a_2$) Control, by means of a spreader or suitable inspection devices, to check the condition inside each tyre 1 and the bead 2 (Fig. 5), discarding tyres having broken cords 5 (Fig. 6), cracks or gaps near the bead, as well as tyres having a predetermined number of broken cords on the body 1, 3.

$a_3$) Control by pumping each tyre between two flanges (Fig. 27) at a higher-than-normal pressure, for example higher than 2 kg/cm$^2$ inside a sealed iron-clad chamber in order to detect possible deformations (Fig. 8a), especially on the sides, due to striking curbs.

These anomalies are clearly visible in the form of notches 8 (Figs. 8b and 8c) followed by projections

2

9, which can be detected only by said test; obviously the apparatus with which this test is performed is provided with a protection screen for the operator carrying out the control through an iron-clad protective glass.

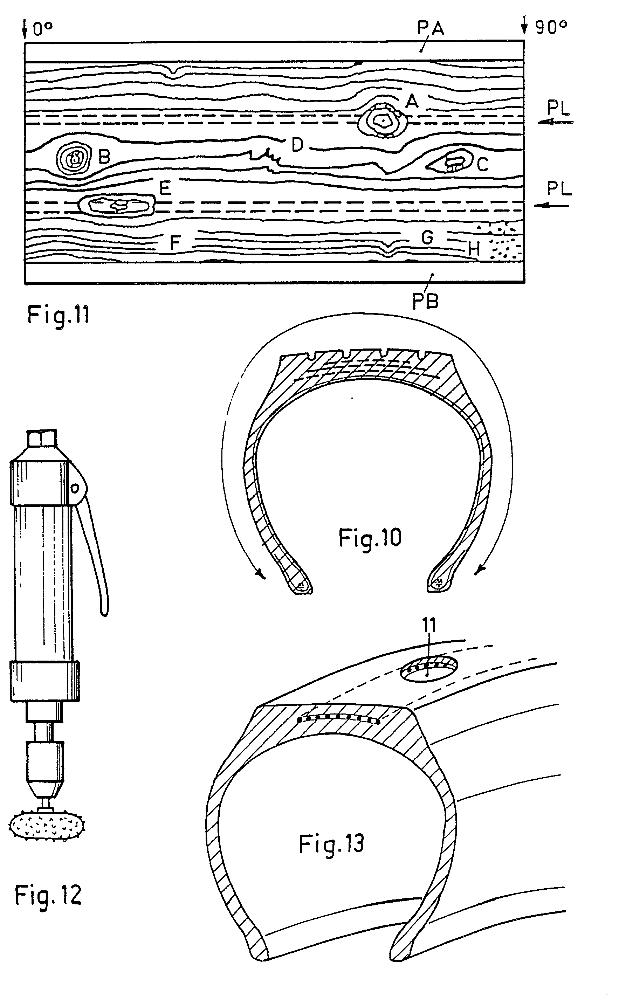

$a_4$) Control carried out by means of a laser (Figs. 9, 10, 11) adapted to check the structure from bead to bead (Fig. 10). It allows ascertaining whether a tyre which was previously controlled and in which no such internal or external anomalies were found that could prevent a possible restructuring, is suitable or unsuitable, by means of an oleographic and sherographic (section-by-section scan) test, shown on the monitor 10 of the apparatus of Fig. 9 and, as a consequence, photographed according to Fig. 11, in which PA indicates the upper part of the bead, PB the bottom part of the bead and PL the sole edges. The function of said laser control is not limited to show anomalies at any point of the body, but it also indicates and determines:

the consistency of the necessary restructuring;

the estimated restructuring cost;

the report on a schedule, in code language, of the restructuring program.

$a_5$) Setting-up a schedule as mentioned above relating to the restructuring program, and calculating the total restructuring cost.

$a_6$) Selecting the suitable tyres from the unsuitable ones by means of these control phases, without working at all on tyres which have not passed the test mentioned above.

The restructuring step according to the present invention, for a deep damaged tyre.

Restructuring, is based on the fact that the tyre is an assembly of parts positioned one on top of another which might have been completely or partly removed.

It includes the following successive phases:

$b_1$) removal of the worn tread portion, eventually the reinforcing, metallic belts and damaged parts.

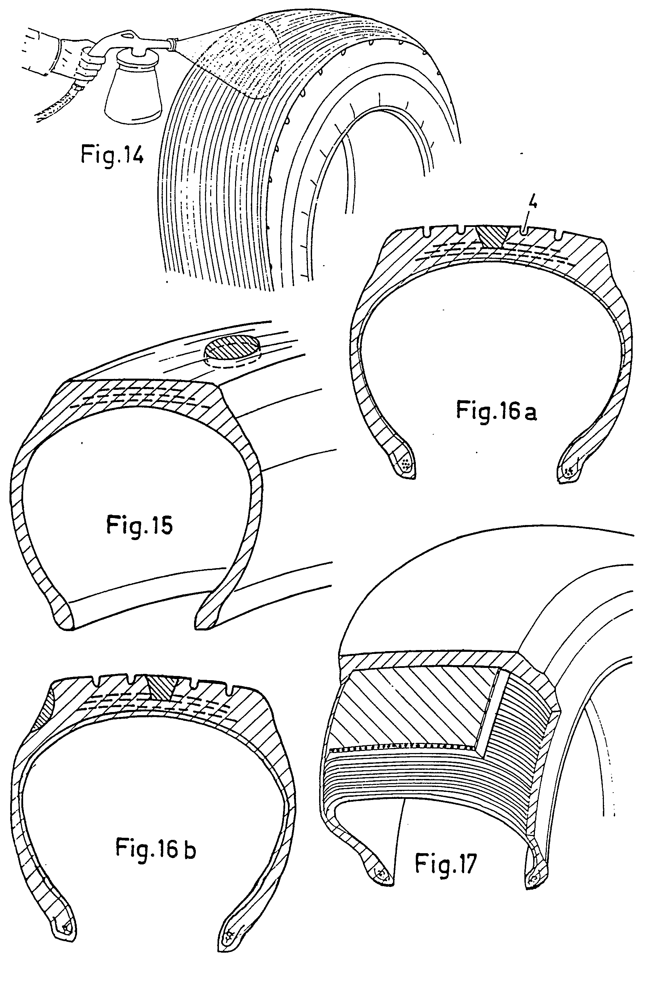

$b_2$) Filling the cavities formed by removing damaged parts by a mixture of non-vulcanized rubber to restore the smooth surface of the entire area to be restructured, including the sides (Figs. 15, 16a, 16b). The grooves 4 (Fig. 16a) do not constitute the tread, but they have the function of retaining better the tread during the subsequent first vulcanization phase ($b_6$).

$b_3$) Subsequent wrapping:

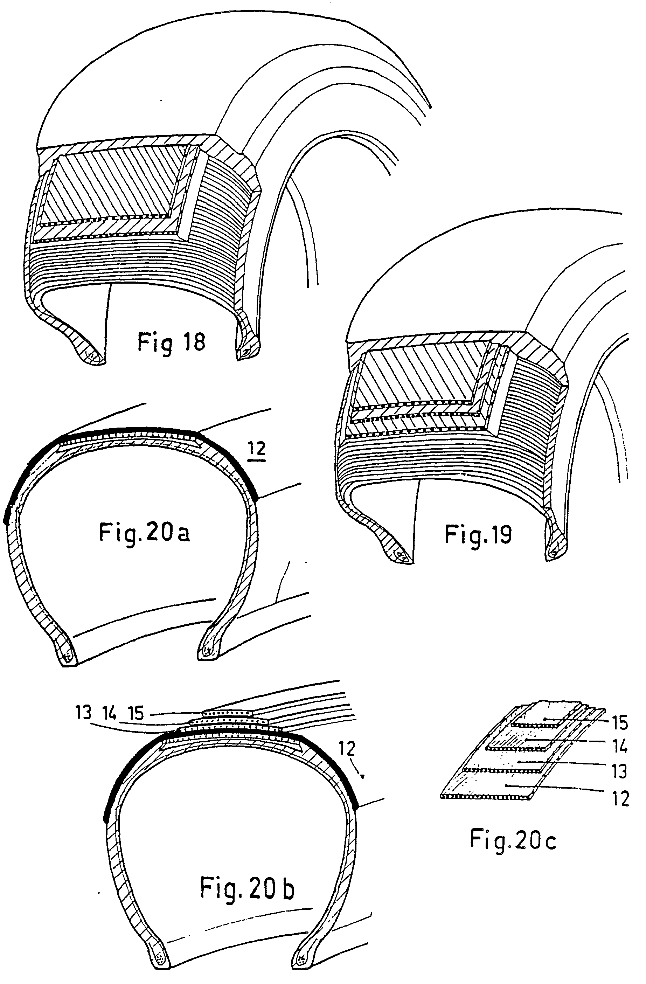

a first rubber sheet 12 (Fig. 20a) to obtain the original radial structure of the tyre;

a first metallic belt 13 (Figs. 17, 20b, 20c);

a second metallic belt 14 (Figs. 18, 20b, 20c) with interposition of possible connecting sheets/layers;

a third metallic belt 15 (Figs. 19, 20b and 20c);

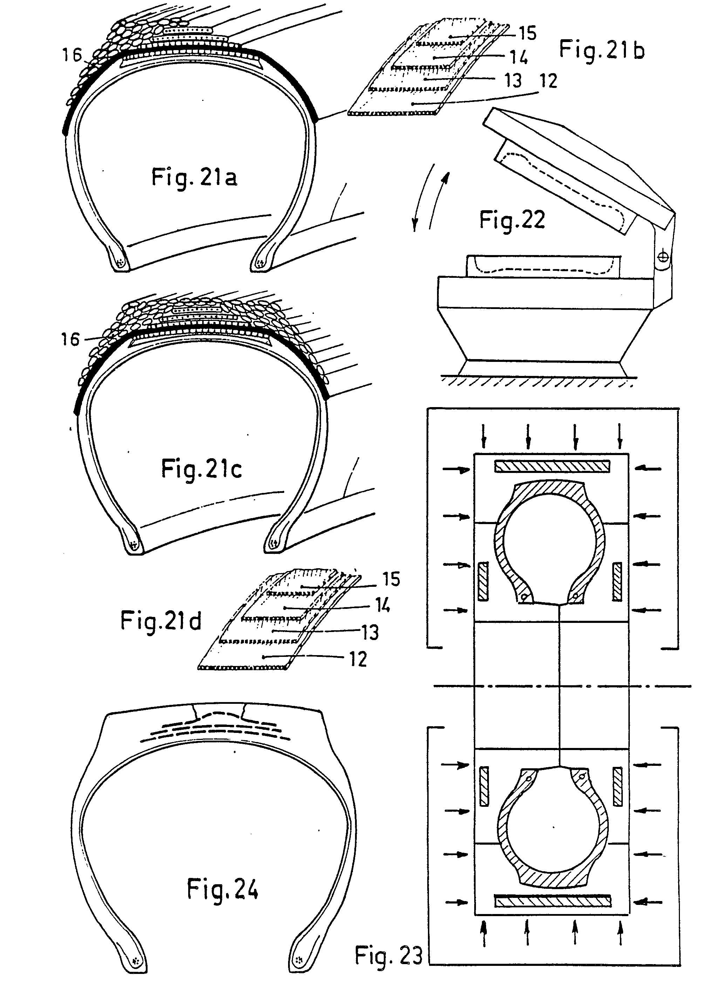

a layer of non-vulcanized rubber 16 (Figs. 21a, 21b, 21c) from one side to the other of the tyre which completely covers the metallic belts, and in the amount required by the size of the matrix having a smooth surface in which the tyre is subsequently positioned for vulcanization.

$b_4$) First vulcanization in a press (Fig. 22) provided with a punch (Fig. 23) having a smooth surface that is, without any projections or indentations, by providing rows of adjustable sensors 17, 18 (Figs. 28a, 28b) positioned longitudinally along the entire periphery of the tread, said sensors being provided with tips 18 adapted to hold the metallic belts 13, 14, 15 thereby preventing their movement during vulcanization. Said tips are axially pierced and engaged by elastic devices 17 which allow their automatic retraction during vulcanization by letting the air or gases flow freely out through said internal holes.

Vulcanization occurs by heating at a temperature of 140° in the matrix or press, by means of circulation of saturated vapor and for a period of time between 12 and 15 minutes (see diagram of Fig. 26).

It is not excluded that the period of time can be extended up to a maximum of 25 minutes.

The automatic retraction of the tips is carried out by means of a grooved ring (not shown), controlled by a timer, which by rotating angularly positions its grooves in correspondence to the back of the tips, allowing their retraction by expansion of the springs.

$b_5$) Control of the correct first vulcanization by means of a laser to check the possible existence of air bubbles between the replaced parts (Fig. 24) which would cause the gradual separation of the bundle of layers applied.

$c_2$) Retreading of the controlled tyre. In case there are air bubbles, a crater 22 (Fig. 29a) and a subsequent filling with vulcanized rubber (Fig. 29b) are carried out, thereby obtaining a perfect assembly (Fig. 25) having no tread, since the anomalies which can be clearly seen after the first vulcanization can be removed without damaging the external appearance of the tyre, as this is still without tread (Fig. 29a). In effect, said anomalies are corrected by reaching the affected area with an abrasive tool, by removing or reestablishing the conditions provided for by restructuring, constituting a crater 22 which is in turn filled with non-vulcanized rubber (Fig. 29b) or press-vulcanized rubber. In this manner, an assembly (Fig. 25) is obtained which is adapted to be fitted with the tread (Fig. 30a).

c) The retreading step comprises the following phases:

$c_1$) spraying a rubber-solvent solution (Fig. 30);

$c_2$) wrapping a sheet of non-vulcanized rubber 21 (Fig. 31a) for joining with a pre-punched band 20 used as a tread (Fig. 31b);

$c_3$) second vulcanization step (Figs. 32a, 32b) effected under head and pressure;

$c_4$) final control.

In Figs. 33a and 33b a different form of the retreaded tyre.

**Claims**

1. Process for rebuilindg used, also deep damaged tyres, comprising:

a) a preliminary control of the used tyre to be retreated;

b) a restructuring step comprising:

removing the worn tread portion, eventually the reinforcing metallic belts and damaged parts;

filling the cavities formed by removing damaged parts with non-vulcanized rubber;

wrapping a rubber sheet, reinforcing metallic belts and a non-vulcanized sheet circumferentially around the tyre;

a first vulcanizing step effected under heat and pressure;

a control of the first vulcanization;

c) a retreading step comprising:

wrapping a non-vulcanized sheet and a new tread circumferentially around the tyre;

a second vulcanizing step effected under heat and pressure.

2. Process according to claim 1, characterized in that the preliminary control of the used tyre to be retreaded comprises:

$a_1$) visual control, at the place where the used tyre is located;

$a_2$) control, by means of a spreader or suitable inspection devices, to check the condition inside each tyre and the bead, discarding tyres having broken cords, cracks or gaps near the bead, respectively having a predetermined number of broken cords (Fig. 6) on the body;

$a_3$) control by pumping each tyre between two flanges (Fig. 27), at a pressure higher than normal, inside a sealed chamber in order to detect possible deformations, especially on the sides, due to striking curbs;

$a_4$) control by means of a laser (Fig. 9, 10, 11) taking a holographic and sherographic (section by section) scanning, by a monitor and photograph, to check the structure of the tyre from bead to bead (Fig. 10);

$a_5$) setting-up a schedule for the restructuring program, and calculating the total restructuring cost;

$a_6$) selecting suitable tyres from unsuitable ones.

3. Process according to claim 1, characterized in that the restructuring step comprises:

$b_1$) removing the worn tread portion, eventually the reinforcing metallic belts and damaged parts;

$b_2$) filling the cavities formed by removing damaged parts by a mixture of non-vulcanized rubber to restore the smooth surface along the entire area to be restructured, including the sides (Figs. 15 and 16b);

$b_3$) wrapping

a first rubber sheet (12) (Fig. 20a) to obtain the original radial structure of the tyre;

a first metallic belt (13) (Fig. 20b);

a second metallic belt (14) with interposition of possible connecting sheets;

a third metallic belt (15) (Figs. 20b and 20c);

a layer of non vulcanized rubber (16) (Figs. 21a, 21b, 21c);

$b_4$) first vulcanization in a press (Fig. 22) provided with a punch (Fig. 23) having a smooth surface, that is, without projections or recesses, by providing rows of adjustable sensors (17, 18), (Figs. 28a, 28b), positioned longitudinally along the entire periphery of the tread, said sensors being provided with tips (18) adapted to hold the metallic belts (13, 14, 15) during vulcanization, said tips being internally pierced and engaged by elastic devices (17) which allow their automatic retraction during first vulcanization by letting the air or gases to flow freely out through said internal holes;

this first vulcanization being made by heating at a temperature of 140° in the matrix or press, by means of circulation of saturated vapor and for a period of time between 12—15 minutes (see diagram of Fig. 26);

$b_5$) control of correct first vulcanization by means of a laser, to detect the possible existence of air bubbles between the replaced parts (Fig. 24).

4. Process according to claim 1 characterized in that the retreading step comprises:

$c_1$) spraying a rubber-solvent solution (Fig. 30);

$c_2$) wrapping a non-vulcanized sheet rubber (21) (Fig. 31a) for joining with a prepunched band (20) which will be used as a new tread;

$c_3$) second vulcanization step (Fig. 32a, 32b) effected under heat and pressure;

$c_4$) final control.

**Patentansprüche**

1. Verfahren zur Runderneuerung gebrauchter, auch stark beschädigter Reifen, das umfaßt:

a) eine vorbereitende Prüfung des gebrauchten, rundzuerneuernden Reifens;

b) einen Restrukturierungsschritt, der beinhaltet:

das Entfernen des verschlissenen Laufflächenteils, letztlich der verstärkenden Metallgürtel und beschädigten Teile;

Füllen der durch das Entfernen der beschädigten Teile gebildeten Hohlräume mit unvulkanisiertem Gummi;

Herumlegen einer Gummilage, verstärkender Metallgürtel und einer unvulkanisierten Lage in Umfangsrichtung rund um den Reifen;

einen ersten, unter Hitze und Druck ausgeführten Vulkanisierschritt;

eine Prüfung der ersten Vulkanisation;

c) einen Runderneuerungsschritt, der beinhaltet:

Herumlegen einer unvulkanisierten Lage und einer neuen Lauffläche in Umfangsrichtung rund um den Reifen;

einen zweiten, unter Hitze und Druck ausgeführten Vulkanisierschritt.

2. Verfahren nach Anspruch 1, dadurch gekennzeichnet, daß die vorbereitende Prüfung des gebrauchten, rundzuerneuernden Reifens umfaßt:

$a_1$) eine visuelle Prüfung am Ort, an dem sich der gebrauchte Reifen befindet;

$a_2$) eine Prüfung mit Hilfe eines Spreizwerkzeugs oder geeigneter Prüfvorrichtungen, um den Zustand innerhalb eines jeden Reifens sowie des Wulstes zu überprüfen, Ausscheiden von Reifen mit gerissenen Korden, Rissen oder Spalten nahe dem Wulst bzw. mit einer vorbestimmten Anzahl von gerissenen Korden (Fig. 6) an der Radialkarkasse;

a$_3$) Prüfen durch Aufpumpen jedes Reifens zwischen zwei Kranzstücken (Fig. 27) innerhalb einer abgedichteten Kammer auf einen höheren Druck als normal, um mögliche Verformungen, insbesondere an den Seiten, auf Grund eines Anstoßens an Bordsteine zu ermitteln;

a$_4$) Prüfung mittels eines Lasers (Fig. 9, 10, 11), der eine holographische und sherographische (Teilschnitt-) Abtastung ausführt, und durch einen Monitor sowie eine Photographie, um die Struktur des Reifens von Wulst zu Wulst zu überprüfen (Fig. 10);

a$_5$) Aufstellen eines Ablaufplans für das Restrukturierungsprogramm und Berechnen der gesamten Restrukturierungskosten;

a$_6$) Selektieren geeigneter Reifen von ungeeigneten Reifen.

3. Verfahren nach Anspruch 1, dadurch gekennzeichnet, daß der Restrukturierungsschritt umfaßt:

b$_1$) Entfernen des verschlissenen Laufflächenteils, letztlich der verstärkenden Metallgürtel und beschädigten Teile;

b$_2$) Füllen der durch Entfernen von beschädigten Teilen gebildeten Hohlräume mit einer Mischung aus unvulkanisiertem Gummi, um die glatte Oberfläche längs des gesamten, zu restrukturierenden Bereichs einschließlich der Seiten (Fig. 15 und 16) wiederherzustellen;

b$_3$) Herumlegen

einer ersten Gummilage (12) (Fig. 20a), um die ursprüngliche Struktur des Reifens zu erlangen;

eines ersten Metallgürtels (13) (Fig. 20b);

eines zweiten Metallgürtels (14) unter Zwischenfügung von etwaigen Verbindungslagen;

eines dritten Metallgürtels (15) (Fig. 20b und 20c);

einer Schicht aus unvulkanisiertem Gummi (16) (Fig. 21a, 21b, 21c);

b$_4$) eine erste Vulkanisation in einer Presse (Fig. 22), die mit einem eine glatte Fläche, d.h. ohne Vorsprünge oder Vertiefungen, aufweisenden Preßwerkzeug versehen ist, indem Reihen von justierbaren Fühlern (17, 18) (Fig. 28a, 28b), die in Längsrichtung entlang des gesamten Umfangs der Lauffläche angeordnet sind, vorgesehen werden, wobei die Fühler mit Spitzen (18), die imstande sind, die Metallgürtel (13, 14, 15) während des Vulkanisierens festzuhalten, ausgestattet und diese Spitzen im Inneren durchbohrt sowie mit elastischen Einrichtungen (17), die ihr automatisches Zurückziehen während der ersten Vulkanisation zulassen, indem für die Luft oder Gase ein freies Ausströmen durch die innenseitigen Bohrungen zugelassen wird, in Anlage sind;

wobei diese erste Vulkanisation durch Erhitzen auf eine Temperatur von 140° in der Form oder Presse mittels Zirkulation von Sattdampf und für eine Zeitspanne zwischen 12—15 Minuten (siehe Diagramm von Fig. 26) durchgeführt wird;

b$_5$) Prüfung der korrekten erste Vulkanisation mittels eines Lasers, um das mögliche Vorhandensein von Luftblasen zwischen den ersetzten Teilen zu ermitteln (Fig. 24).

4. Verfahren nach Anspruch 1, dadurch gekennzeichnet, daß der Runderneuerungsschritt umfaßt:

c$_1$) Aufsprühen einer Gummilösungsmittel-Lösung (Fig. 30),

c$_2$) Herumlegen einer Lage (21) aus unvulkanisiertem Gummi (Fig. 31a) zur Verbindung mit einem vorgelochten Band (20), das als eine neue Lauffläche verwendet wird;

c$_3$) einen zweiten, unter Hitze und Druck durchgeführten Vulkanisierschritt (Fig. 32a, 32b);

c$_4$) eine Endkontrolle.

## Revendications

1. Procédé pour reconstruire des pneus usagés et aussi endommagés en profondeur, comprenant:

a) un contrôle préliminaire du pneu usé à retraiter;

b) une opération de restructuration consistant à:

retirer la partie de bandage usée, eventuellement les bandes de renfort métallique et les parties endommagées;

combler les cavités formées par l'enlèvement des parties endommagées avec du caoutchouc non vulcanisé;

envelopper d'une feuille de caoutchouc, renforcer de bandes métalliques et entourer une feuille non vulcanisée autour de la circonférence du pneu;

effectuer une première opération de vulcanisation à chaud et sous pression;

contrôler la première vulcanisation.

c) Une opération de rechapage consistant à:

envelopper d'une feuille non vulcanisée et d'un nouveau bandage la circonférence du pneu;

effectuer une seconde opération de vulcanisation à chaud et sous pression.

2. Procédé selon la revendication 1, caractérisé par le fait que le premier contrôle du pneu usagé à retraiter comprend:

a$_1$) un contrôle visuel, à l'endroit où le pneu usagé se trouve;

a$_2$) un contrôle, grâce à un tendeur ou d'autres dispositifs d'inspection appropriés, pour vérifier l'état de l'intérieur de chaque pneu et de chaque talon, en éliminant les pneus qui ont des cordes cassées, des fissures ou des coupures à proximité du talon, ou qui ont respectivement un nombre prédéterminé de cordes cassées (figure 6) sur la carcasse;

a$_3$) un contrôle en gonflant chaque pneu entre deux flasques (figure 27) sous une pression supérieure à la normale, à l'intérieur d'une chambre étanche dans le but de détecter des déformations possibles, surtout sur les flancs, par suite des chocs dans les trottoirs;

a$_4$) un contrôle grâce à un laser (figures 9, 10, 11) en effectuant un balayage holographique et stéréographique (section par section), grâce à un moniteur et des photographies, pour vérifier la structure du pneu d'un talon à l'autre (figure 10);

a₅) l'établissement d'une fiche pour le programme de restructuration, et calcul du coût total de la restructuration;

a₆) la sélection de pneus convenables parmi ceux qui ne conviennent pas.

3. Procédé selon la revendication 1, caractérisé par le fait que l'opération de restructuration consiste à:

b₁) éliminer la partie de bande de roulement usée, éventuellement les ceintures métalliques de renfort et les parties endommagées;

b₂) remplir les cavités formées en retirant les parties endommagées d'un mélange de caoutchouc non vulcanisé pour rétablir une surface lisse dans toute la zone à restructurer, y compris les flancs (figures 15 et 16b);

b₃) envelopper

d'une première couche de caoutchouc (12) (figure 20a) pour obtenir la structure radiale orginale du pneu;

d'une première ceinture métallique (13) (figure 20b);

d'une seconde ceinture métallique (14) en intercalant éventuellement des feuilles de liaison;

d'une troisième ceinture métallique (15) (figures 20b et 20c);

d'une couche de caoutchouc non vulcanisé (16) (figures 21a, 21b, 21c);

b₄) une première opération de vulcanisation dans une presse (figure 22) équipée d'une poinçon (figure 23) ayant une surface lisse, c'est-à-dire sans partie en saillie ni en retrait, en installant des rangées de capteurs appropriés (17, 18) (figures 28a, 28b), disposés longitudinalement sur toute la périphérie de la bande de roulement, lesdits capteurs ayant des pointes (18) conçues pour maintenir les ceintures métalliques (13, 14, 15) pendant la vulcanisation, lesdites pointes étant percées intérieurement et en prise avec des dispositifs élastiques (17) qui permettent leur retrait automatique pendant la première vulcanisation en laissant l'air ou les gaz circuler librement vers l'extérieur desdits trous internes;

cette première vulcanisation étant effectuée en chauffant à une température de 140° dans la matrice ou dans la presse, par une circulation de vapeur saturée et pendant un temps compris entre 12 et 15 minutes (voir le diagramme de la figure 26);

b₅) contrôle de la première vulcanisation correcte grâce à un laser, pour détecter l'existence possible de bulles d'air entre les parties remplacées (figure 24).

4. Procédé selon la revendication 1, caractérisé par le fait que l'opération de rechapage consiste à:

c₁) vaporiser de la dissolution (figure 30);

c₂) envelopper d'une feuille de caoutchouc non vulcanise (21) (figure 31a) pour l'assemblage avec une bande préperforée (20) qui servira de nouvelle bande de roulement;

c₃) seconde opération de vulcanisation (figures 32a, 32b) effectuée à chaud et sous pression;

c₄) contrôle final.

Fig.1

Fig.2

Fig.3

Fig.4

Fig.5

Fig.6

Fig.7

Fig.8a

Fig.8b

Fig.8c

Fig.9

Fig.11

Fig.10

Fig.12

Fig.13

Fig.14

Fig.15

Fig.16 a

Fig.16 b

Fig.17

4

Fig 18

Fig.19

Fig.20a

<u>12</u>

Fig.20b

13 14 15

12

Fig.20c

15
14
13
12

Fig. 21a

16

Fig. 21b

15
14
13 12

Fig. 22

Fig. 21c

16

Fig. 21d

15
14
13
12

Fig. 24

Fig. 23

6

Fig. 25

Fig.28a

°C

140°

100

T=140 °C

Fig.26

Topt

Tmax

5    10    12    15 Tmin
                 13,5

Fig. 27

7

Fig. 28b

Fig. 29a

Fig. 31a

Fig. 29 b

Fig. 31b

Fig. 30

8

Fig. 32 a

Fig. 32b

Fig. 33a

Fig. 34

Fig. 33b

9